# FASCICULE DE BREVET EUROPEEN

(11) **EP 2 611 289 B1**
(45) Date de publication et mention de la délivrance du brevet: **06.01.2016**
(21) Numéro de dépôt: 11723525.9
(22) Date de dépôt: 28.04.2011
(51) Int. Cl.: B05B 7/24, B05B 7/32, A01M 7/00, B05B 15/02, B05B 12/14

(54) **ENSEMBLE DE PULVÉRISATION ET PULVÉRISATEUR ÉQUIPÉ D'AU MOINS UN TEL ENSEMBLE**
SPRÜHANORDNUNG UND ZERSTÄUBER MIT MINDESTENS EINER DERARTIGEN ANORDNUNG
SPRAYING ASSEMBLY, AND SPRAYER EQUIPPED WITH AT LEAST ONE SUCH ASSEMBLY

(30) Priorité: 31.08.2010 FR 1056896
(43) Date de publication de la demande: 10.07.2013
(73) Titulaire: EXEL INDUSTRIES, 51200 Epernay (FR)
(72) Inventeur: BALLU, Patrick, F-51100 Reims (FR)
(74) Mandataire: Myon, Gérard Jean-Pierre
(86) Numéro de dépôt international: PCT/FR2011/050965
(87) Numéro de publication internationale: WO 2012/028794

(56) Documents cités:
- WO-A1-90/11010
- WO-A2-2005/048704
- WO-A2-2011/034370
- CH-A- 375 557
- US-A- 4 315 600
- US-A- 4 364 516
- US-A- 4 580 721

## Description

La présente invention se rapporte à un ensemble de pulvérisation, et à un pulvérisateur équipé d'au moins un tel ensemble.

Un pulvérisateur agricole classique, par exemple un tracteur, comporte une rampe équipée d'une pluralité de buses de pulvérisation reliées à des conduites dans lesquelles circule un produit liquide à pulvériser sur les végétaux à traiter. Les végétaux à traiter peuvent être de toute nature et le terme « agricole » s'entend ici au sens large, incluant notamment les cultures arboricoles.

Dans le cas d'un système de pulvérisation à injection directe, une matière active liquide ou pulvérulente est incorporée ou mélangée au liquide à pulvériser (en général de l'eau claire) en amont de la rampe, au fur et à mesure de la pulvérisation, comme envisagé dans WO-A-90/11010 où un clapet anti-retour en forme de bille est installé en sortie d'une pompe de dosage relativement éloignée des buses qu'elle alimente.

Un tel système présente un certain nombre d'inconvénients.

Lorsque le pulvérisateur ralentit, le débit d'injection de matière active dans le liquide à pulvériser diminue.

Toutefois, notamment dans le cas d'une rampe de grande longueur, le liquide plus faiblement dosé en matière active met un certain temps avant d'atteindre les buses, et pendant cette durée les végétaux sont surdosés en matière active. La rampe induit une inertie dans le dosage du mélange de matière active et de liquide à pulvériser.

Inversement, lorsque le pulvérisateur accélère, le débit d'injection en matière active dans le liquide à pulvériser augmente.

Le liquide plus fortement dosé en matière active met un certain temps avant d'atteindre les buses, et pendant cette durée les végétaux sont sous-dosés en matière active.

De plus, au cours de la modification de la vitesse du pulvérisateur, ces phénomènes de surdosage ou de sous-dosage se superposent, ce qui cumule, en les amplifiant, leurs effets négatifs respectifs décrits ci-dessus.

On a pu constater en outre que les phénomènes de surdosage ou de sous-dosage étaient irréguliers et asynchrones, selon la distance de chaque buse par rapport au point d'incorporation de la matière active dans le liquide à pulvériser, notamment dans le cas des rampes de grande longueur.

En outre, lors du redémarrage de la pulvérisation par un tronçon de rampe comprenant plusieurs buses, suite à une interruption temporaire de cette pulvérisation, le liquide qui s'écoule initialement dans la conduite résulte d'un dosage opéré avant cette interruption. Or, un tel dosage ne correspond généralement pas au dosage requis après ce redémarrage, car la vitesse du pulvérisateur change relativement souvent.

WO-A-2005/048704 décrit un ensemble de pulvérisation comprenant une buse pour projeter un liquide à pulvériser et des pompes de matière active qui sont situées directement en amont de la buse, pour introduire la matière active dans une zone de mélange avec le liquide à pulvériser.

Ce document décrit un ensemble selon la préambule de la revendication 1.

Cependant, la chambre de pompage de chaque pompe de matière active est en communication de fluide permanente avec cette zone de mélange. Or, même si cette chambre de pompage a un volume sensiblement inférieur au volume de la rampe, elle induit également une certaine inertie volumique dans le dosage du mélange à réaliser, ce qui empêche l'ensemble de pulvérisation de réaliser des variations rapides, voire instantanées, de la concentration de ce mélange et conduire à des surdosages.

La présente invention a notamment pour but de remédier à ces inconvénients, en proposant un ensemble de pulvérisation et un pulvérisateur très réactifs, fiables et relativement faciles à régler à distance, éventuellement de manière électronique.

A cet effet, l'invention a pour objet un ensemble de pulvérisation, comprenant au moins une buse destinée à projeter un liquide à pulvériser, ainsi qu'au moins un injecteur de matière active dans le liquide à pulvériser, l'injecteur étant situé directement en amont de la ou chaque buse et alimenté en matière active au moyen d'une pompe ou d'un réservoir sous pression, avec interposition d'un obturateur sur une conduite reliant la pompe ou le réservoir sous pression à l'injecteur. Cet ensemble comprend en outre, pour chaque injecteur, un clapet de sortie agencé de façon à en obturer un orifice de sortie.

Au sens de la présente invention, l'injecteur est situé directement en amont de la ou de chaque buse, c'est-à-dire que le trajet d'écoulement de la matière active entre la sortie de l'injecteur et la buse a une longueur de quelques cm seulement.

Grâce à ces caractéristiques, l'ensemble selon l'invention permet d'incorporer la matière active au liquide à pulvériser au dernier moment, c'est-à-dire juste en amont d'une buse ou d'un groupe de buses, et donc juste avant la pulvérisation effective de ce liquide.

On peut donc adapter de manière instantanée le dosage en matière active du liquide à pulvériser, et par conséquent éviter les surdosages ou les sous-dosages constatés dans la technique antérieure.

Suivant d'autres caractéristiques avantageuses mais optionnelles de l'ensemble de pulvérisation selon l'invention, prises isolément ou selon toute combinaison techniquement admissible :
- le ou chaque clapet de sortie est un pointeau adapté pour accoster un siège ménagé au niveau de l'orifice de sortie ;
- la ou chaque buse et le ou chaque injecteur sont montés sur un même corps ou sur deux corps voisins, un mélange du liquide à pulvériser avec de la matière active se produisant par turbulence dans le ou chaque corps ;
- cet ensemble comprend une pluralité d'injecteurs situés directement en amont de la ou chaque buse ;
- cet ensemble comprend des moyens de commande à distance de chaque injecteur et/ou de chaque clapet de sortie, et le ou chaque injecteur et/ou le ou chaque clapet de sortie est actionnable à distance ;
- le ou chaque injecteur est choisi dans le groupe comprenant une vanne ou une pompe de type céramique, électromagnétique, piézoélectrique ou péristaltique ;
- l'ensemble comprend plusieurs injecteurs alimentés en matière active ainsi qu'une rampe qui comprend plusieurs injecteurs pour injecter de l'air dans chaque injecteur alimenté en matière active.

La présente invention a également pour objet un pulvérisateur équipé d'au moins un ensemble conforme à ce qui précède, comprenant au moins une conduite principale destinée à alimenter la ou chaque buse en liquide à pulvériser, et au moins une conduite secondaire destinée à alimenter le ou chaque injecteur en matière active.

Suivant d'autres caractéristiques avantageuses mais optionnelles du pulvérisateur objet de l'invention, prises isolément ou selon toute combinaison techniquement admissible :
- le pulvérisateur comprend une pluralité de conduites secondaires alimentant respectivement chaque injecteur ;
- le pulvérisateur comprend des moyens pour maintenir la pression, du liquide à pulvériser, constante directement en amont de la ou chaque buse ;
- le pulvérisateur comprend des moyens de régulation du débit de matière active dans le ou chaque corps ;
- le pulvérisateur comprend des moyens de régulation adaptés pour réguler le débit de matière active dans chaque injecteur en fonction de la vitesse de déplacement du pulvérisateur et/ou de l'état de la surface végétale à traiter, par exemple selon que les plantes à pulvériser sont vigoureuses ou en mauvaise santé
- chaque moyen pour maintenir la pression du liquide à pulvériser et chaque moyen de régulation du débit est actionnable individuellement et indépendamment ;
- le ou chaque injecteur comprend une pompe ou une vanne piézoélectrique, électromagnétique ou péristaltique, et les moyens de commande sont adaptés pour faire varier la vitesse de fonctionnement de la pompe ou de la vanne afin d'en piloter le débit ; et
- au moins une des conduites secondaires est adaptée pour canaliser un premier type de matière active, par exemple un herbicide (éventuellement sélectif, et donc dangereux pour d'autres cultures) et au moins une autre des conduites secondaires est adaptée pour canaliser un deuxième type de matière active, par exemple un insecticide, un fongicide ou un agent mouillant.
- la ou chaque conduite principale comporte au moins une vanne pour commander la circulation de liquide à pulvériser et la ou chaque conduite secondaire comporte au moins un obturateur pour commander la circulation de matière active, la ou chaque vanne et le ou chaque obturateur étant actionnables à distance.

L'invention concerne également un procédé de nettoyage d'un ensemble de pulvérisation dans lequel sont prévus des moyens d'injection d'air dans chaque injecteur à travers son orifice de sortie. Ce procédé comprend des étapes consistant à injecter à partir de la rampe et dans chaque injecteur, à contre-courant de la matière active à pulvériser dans cet injecteur, une quantité d'air et à repousser une partie de la matière active présente dans cet injecteur et dans ses moyens d'alimentation vers un réservoir de stockage de matière active.

La présente invention sera bien comprise et ses avantages ressortiront aussi à la lumière de la description qui va suivre, donnée uniquement à titre d'exemple non limitatif, en référence aux dessins annexés, dans lesquels :
- la figure 1 est un schéma d'un ensemble de pulvérisation conforme à un premier mode de réalisation de l'invention ; et
- la figure 2 est un schéma analogue à la figure 1 d'un ensemble de pulvérisation conforme à un deuxième mode de réalisation de l'invention.

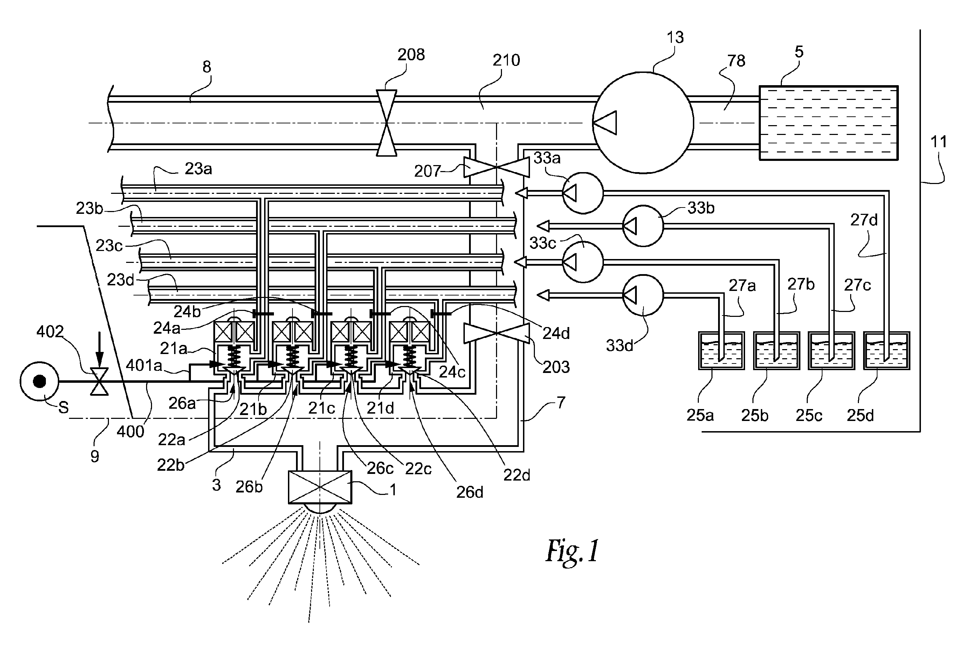

On peut voir sur la figure 1 une buse 1 montée sur un corps 3 relié à une cuve principale 5 par l'intermédiaire d'une conduite commune 78 et d'une conduite principale 7. L'entrée de la conduite commune 78 est connectée sur la cuve principale 5. La conduite principale 7 débouche dans le corps 3.

Le terme « relier » se rapporte à une communication de fluide, ce qui implique une conduite permettant à un fluide de circuler entre deux composants d'un ensemble de pulvérisation, par exemple entre la cuve principale 5 et le corps 3. Une telle conduite peut être matérialisée par un tuyau souple, par un tube rigide ou par tout autre moyen connu équivalent.

Alternativement, la ou chaque buse 1 et le ou chaque injecteur 21a à 21 d peuvent être montés sur deux corps de type 3 voisins, c'est-à-dire proches l'un de l'autre.

Le ou chaque corps 3 est adapté pour produire un mélange du liquide à pulvériser avec de la matière active. Dans ce but, le ou chaque corps 3 peut être équipé d'un mélangeur statique, de chicanes et/ou d'hélices etc. Une vanne 203 est agencée sur la conduite principale 7 pour empêcher, le cas échéant, le retour de ce mélange dans la conduite principale 7. En variante, la vanne 203 peut être remplacée par un claper anti-retour.

Le corps 3 est lui-même monté sur une structure de rampe de pulvérisation 9.

La cuve principale 5 et la rampe 9 sont montées sur le châssis 11 d'un pulvérisateur agricole, tel qu'un tracteur ou une remorque.

Une pompe principale 13 est disposée sur la conduite commune 78 entre la cuve principale 5 et le corps 3. La conduite 78 est dite commune, car elle débouche, par l'intermédiaire d'un té 210, d'une part sur la conduite principale 7 et d'autre part sur une conduite de retour 8 destinée à permettre au liquide à pulvériser de circuler jusqu'à la cuve principale 5.

Le premier ensemble de pulvérisation comporte une vanne 207 et une vanne 208 agencées respectivement sur la conduite principale 7 et sur la conduite de retour 8 pour y commander la circulation de liquide à pulvériser.

Les vannes 203, 207 et 208 sont pilotées en position ouverte ou en position fermée par des organes électriques appropriés et non représentés.

Lorsque la vanne 207 est ouverte, le liquide à pulvériser circule dans la conduite principale 7. Lorsque la vanne 207 est fermée, le liquide à pulvériser ne circule pas dans la conduite principale 7.

De même, lorsque la vanne 208 est ouverte, le liquide à pulvériser circule dans la conduite de retour 8. Lorsque la vanne 208 est fermée, le liquide à pulvériser ne circule pas dans la conduite de retour 8, mais il s'écoule dans la conduite principale 7 si la vanne 207 est ouverte.

Cet ensemble de pulvérisation peut ainsi fonctionner en recirculation, notamment pour maintenir le liquide en mouvement même après avoir provisoirement interrompu, de façon partielle ou totale, sa pulvérisation.

Plusieurs injecteurs 21 a, 21 b, 21 c et 21 d, quatre dans l'exemple représenté, sont montés sur le corps 3 et reliés respectivement chacun à une cuve secondaires 25a, 25b, 25c et 25d par des conduites secondaires 27a, 27b, 27c et 27d.

Sur les conduites secondaires 27a à 27d se trouvent des pompes respectives 33a, 33b, 33c et à 33d.

Les injecteurs 21 a à 21 d peuvent être des vannes ou des pompes céramiques ou électromagnétiques ou piézo-électriques. Chacun des injecteurs 21 a à 21 d est actionnable à distance, c'est-à-dire qu'il peut être commandé par des moyens électriques appropriés et distants, donc non représentés.

Chaque injecteur 21a, 21b, 21c et 21d comporte en outre un obturateur, ou un clapet anti-retour, respectif 24a, 24b, 24c et 24d, lequel est disposé sur la conduite secondaire 23a, 23b, 23c et 23d correspondante, de façon à couper l'alimentation.

De plus, l'ensemble de pulvérisation comprend des clapets de sortie qui sont respectivement agencés près et en aval de chaque injecteur 21 a à 21 d de façon à en obturer l'orifice de sortie 26a à 26d. Chaque clapet de sortie est constitué d'un pointeau 22a à 22d de forme conique, plate, ou en piston, adapté pour accoster un siège ou un alésage de forme complémentaire qui est ménagé au niveau de l'orifice de sortie 26a à 26d correspondant.

Chaque pointeau 22a à 22d a pour fonction d'autoriser ou d'arrêter la communication de fluide entre le volume propre de l'injecteur 21a à 21d susceptible de contenir de la matière active et la buse 1 ou, plus précisément, le corps 3.

On a représenté sur la figure 1 un seul corps 3 supportant une seule buse 1 et quatre injecteurs 21a à 21d, mais la rampe 9 peut être pourvue d'une pluralité de corps 3 supportant chacun une ou plusieurs buses 1 et un ou plusieurs injecteurs 21.

Chacun des corps 3 est en communication de fluide avec la conduite principale 7, et chacun des injecteurs 21 est en communication de fluide avec une conduite secondaire 23 qui le concerne.

Des moyens de mise en turbulence non représentés sont prévus dans le corps 3. Ils favorisent un mélange par turbulence entre le liquide à pulvériser et la matière active sortant d'un injecteur 21.

Typiquement, les corps 3 peuvent être répartis, selon les besoins, à intervalles réguliers ou non, par exemple tous les cinquante centimètres sur la rampe 9.

Alternativement, les corps 3 peuvent être montés sur des tronçons indépendants de la rampe 9. On appelle « tronçon » un groupe de buses de type 1 qui sont disposées successivement le long de la rampe 9 ou juxtaposées sur une branche indépendante, et dont les buses peuvent être commandées et fonctionner simultanément, quand elles ne sont pas commandées individuellement.

Dans une première réalisation, les pompes secondaires 33 sont typiquement adaptées pour générer dans les conduites secondaires 23a à 23d une pression de liquide supérieure à celle qui règne dans la conduite principale 7 et dans le corps 3. Cette pression peut être par exemple de l'ordre de dix bars.

Dans une seconde réalisation, il n'y a plus de pompes 33 et les bidons 25 sont maintenus en légère surpression, de quelques décibars, par rapport à la pression de pulvérisation générée par la pompe principale 13. Ceci peut être obtenu, par exemple au moyen d'échangeurs de pression, pneumatiques ou hydrauliques, à pistons ou à membranes mais de sections différentes, situés entre les circuits 7 et 23

Afin de maîtriser la taille et le spectre des gouttes pulvérisées, le pulvérisateur agricole comprend, en outre, des moyens non représentés pour maintenir la pression du liquide à pulvériser constante directement en amont de chaque buse 1. De tels moyens peuvent être par exemple constitués de régulateurs à soupape ou à membrane ou d'autres moyens connus équivalents. Les termes « amont » et « aval » se rapportent au sens d'écoulement du fluide considéré, à savoir le liquide à pulvériser, la matière active ou leur mélange.

Le pulvérisateur agricole comprend aussi des moyens non représentés de régulation du débit de matière active dans chaque conduite secondaire 23a à 23d. L'alimentation de chaque injecteur 21 a à 21 d en matière active dépend donc de ces moyens de régulation.

De tels moyens de régulation du débit de matière active, ainsi que les obturateurs 24a à 24d (en tout ou rien), ou les injecteurs 21 (en variation discrète, par impulsions électriques) commandant l'alimentation en liquide à pulvériser, peuvent être commandés en fonction des données fournies par un système de positionnement global (de type GPS) ou par une caméra embarquée sur la rampe ou sur l'engin agricole et couplée à un système de traitement d'images.

Un tel système de traitement d'images permet de détecter les adventices à détruire ou évaluer, selon la couleur des végétaux, leurs besoins en matière active pour leur croissance, tel que les engrais ou les régulateurs de croissance.

De plus, les circuits de matière active peuvent présenter des structures et/ou des agencements différenciés en fonction du type de matière active qu'ils sont respectivement destinés à conduire.

Ainsi, chaque cuve secondaire 25a à 25d peut être adaptée pour recevoir un type déterminé de matière active et chaque conduite secondaire 23a à 23d peut être adaptée pour canaliser le type de matière active correspondant.

Par exemple, la conduite secondaire 23a peut être réservée pour canaliser seulement des herbicides sélectifs (dangereux pour d'autres cultures), tandis que la conduite secondaire 23d peut être adaptée pour canaliser plutôt des fongicides ou des insecticides (dont les résidus ne sont pas nocifs à d'autres cultures).

De tels moyens peuvent être adaptés pour réguler le débit de matière active proportionnellement à la vitesse d'avancement du pulvérisateur et/ou à la surface végétale à traiter. La surface végétale à traiter peut être évaluée au moyen d'une caméra embarquée sur la rampe ou sur l'engin agricole et couplée à un système de traitement d'images.

Dans le cas où chaque injecteur 21 a à 21 d comprend une vanne ou une pompe électromagnétique ou piézoélectrique, ces moyens de régulation sont formés par un circuit électronique adapté pour faire varier la fréquence de vibration de chaque injecteur 21a à 21 d. Le mode de fonctionnement et les avantages de la présente invention résultent directement de la description qui précède.

Dans la cuve principale 5 on place un liquide à pulvériser. Il peut s'agir soit d'eau claire, soit d'un mélange d'eau claire et d'un produit phytosanitaire, soit éventuellement d'un engrais liquide, qui doit être pulvérisé à l'état pur et à grand volume par hectare.

En fonctionnement, la pompe principale 13 envoie le liquide à pulvériser dans tous les corps 3 répartis sur la rampe 9, permettant ainsi la pulvérisation de ce liquide par les buses

La pompe 13 peut être de type volumétrique, à pression constante ou à débit constant. Elle peut être à pistons, à membranes, centrifuge ou autre.

Avec les dispositifs d'injecteurs 21, qui régulent directement la quantité de matière active par hectare, la pompe 13 est maintenue à pression constante. Cette pression est choisie, en association avec le type de buses installées, pour générer des gouttes de taille et de spectre prédéterminés, non modifiés par la vitesse d'avancement ni par la quantité de matière active introduite par les injecteurs 21

Par exception, lorsqu'on préfère utiliser le pulvérisateur de manière classique, sans utiliser les injecteurs 21/221, la pompe 13 peut alors être interfacée avec un système de régulation du type DPA, soit Débit Proportionnel à l'Avancement, qui permet d'adapter le débit de liquide dans la conduite principale 7 en fonction de la vitesse d'avancement du pulvérisateur.

Dans les cuves secondaires 25a à 25d on place des mélanges contenant des matières actives destinées à être incorporées au liquide à pulvériser.

Cette incorporation est effectuée en agissant sur les pompes secondaires 33a à 33d, de manière sélective ou simultanée. Cette incorporation peut aussi être effectuée en mettant les cuves 25a à 25d sous pression d'air, ou sous pression hydrostatique grâce à des échangeurs de pression, comme évoqués ci-dessus, dans la mesure où on n'utilise pas les pompes 33a à 33d, mais directement les injecteurs 21/221, qui jouent alors le rôle de simples doseurs.

Ce faisant, les injecteurs 21 a à 21 d injectent les mélanges de matières actives concernées dans le corps 3, c'est-à-dire juste en amont de la buse 1.

Ces matières actives sont donc incorporées au liquide provenant de la cuve principale 5 immédiatement avant la pulvérisation, et donc pulvérisées sur les végétaux à traiter en tenant compte de la vitesse d'avance du pulvérisateur, ce qui évite les surdosages et les sous-dosages

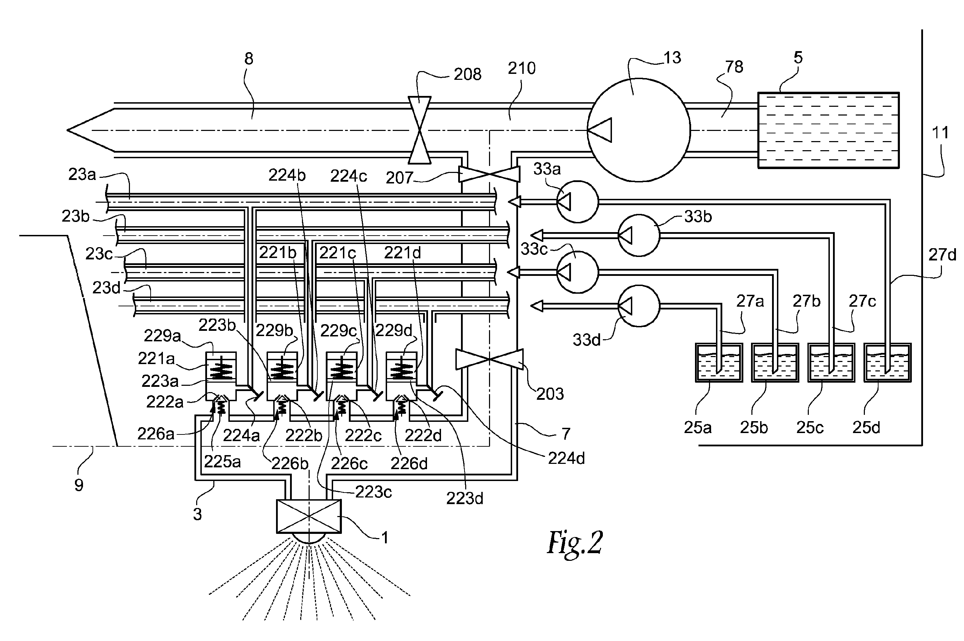

La figure 2 montre un deuxième ensemble de pulvérisation en tant que variante au premier ensemble de pulvérisation illustré à la figure 1. Sur la figure 2, les composants du deuxième ensemble de pulvérisation qui ont une structure et une fonction identiques aux composants du premier ensemble de pulvérisation portent les mêmes références numériques et fonctionnent de façon comparable, à l'exception des différences indiquées ci-après.

Chaque injecteur 221a à 221 d de ce mode de réalisation comprend un piston 223a et 223d, commandé par un composant piézoélectrique 229a à 229d disposé à l'intérieur du corps de l'injecteur, ce qui n'est représenté que partiellement à la figure 2. Ceci permet de constituer, au sein de chaque injecteur une micro pompe piézoélectrique capable de délivrer une quantité prédéterminée de liquide à la buse 1, proportionnelle à sa fréquence de vibration. En pratique, chaque piston 223a et 223d peut être constitué par une ou plusieurs faces du composant piézoélectrique car les vibrations d'un tel composant induisent des translations alternées de ses faces.

En variante, les pistons 223a à 223d sont remplacés par des membranes commandées par un dispositif électromagnétique. On utilise alors des pompes à membranes.

En variante, une micro pompe magnétique, ou en céramique, ou une micro pompe péristaltique peut être utilisée dans chaque injecteur 221 a à 221 d.

Selon le type de pompe utilisé dans les injecteurs, et de sa puissance débitante, on peut se passer des pompes 33a à 33d qui sont donc optionnelles, en mettant par exemple les réservoirs 25a à 25d en légère surpression, de quelques déci bars, par rapport aux conduites 7 et 8, comme envisagé ci-dessus avec échangeur de pression.

Des clapets de sortie constitués de pointeaux 222a à 222d sont respectivement agencés près et en aval de chaque injecteur 221a à 221 d correspondant, de façon à en obturer l'orifice de sortie 226a à 226d. Chaque pointeau 222a à 222d a une forme globalement conique pour accoster un siège de forme complémentaire qui est ménagé au niveau de l'orifice de sortie 226a à 226d correspondant.

Chaque pointeau 222a à 222d a pour fonction d'autoriser ou d'arrêter la communication de fluide entre le volume propre de l'injecteur 221a à 221 d et la buse 1.

Les pointeaux respectifs222a à 222d des injecteurs 221 a à 221 d sont montés en sens opposé par rapport aux pointeaux 22a à 22d des injecteurs 21 a à 21 d. Les pointeaux 222a à 222d agissent comme des clapets de refoulement, tandis que les pointeaux 22a à 22d des injecteurs 21 a à 21 d agissent comme des clapets d'ouverture de la chambre 21 a à 21 d respective vers le corps 3. Les pointeaux 22a à 22d et 222a à 222d remplissent aussi une fonction d'anti-retour vers l'amont.

Chaque injecteur 221a à 221 d comporte en outre un clapet, tel l'obturateur 224a, disposé sur la conduite secondaire 23a à 23d correspondante, de façon à couper l'alimentation. Un tel obturateur peut aussi fonctionner à l'aspiration. Il forme avantageusement un clapet anti-retour.

En fonctionnement, lorsque le piston 223a a reculé pour aspirer la matière active dans l'injecteur 221 a, l'obturateur 224a s'ouvre automatiquement. Puis, lorsque le piston 223a avance au sein de l'injecteur 221 a, en direction du pointeau 222a, l'obturateur 224a se ferme automatiquement.

Lorsque la pression de matière active dans l'injecteur 221a dépasse l'effort dû à la raideur d'un ressort 225a rappelant le pointeau 222a en position fermée, ce dernier s'ouvre et la matière active est refoulée hors de l'injecteur 221 a dans le corps 3 et vers la buse 1, sans remonter dans la conduite principale 7 vers la cuve principale 5, en raison de la présence du vanne anti-retour 203.

Les injecteurs 221 b à 221 d ont la même structure et fonctionnent de la même manière que l'injecteur 221a décrit ci-dessus.

Comme la vanne 207 et chaque pompe sont actionnables à distance, il est possible de ne commander la circulation de matière active et/ou de ne piloter la pulvérisation de liquide qu'en présence des végétaux à traiter.

Le pulvérisateur agricole est déclenché par des signaux de détection de végétaux à traiter, lesquels déterminent les phases de pulvérisation et/ou les phases d'injection de matière active. De tels signaux peuvent être par exemple générés par un système de traitement d'images acquises par une caméra embarquée sur la rampe ou sur l'engin agricole. Ainsi, la pulvérisation peut n'être activée, buse par buse, qu'en présence des végétaux à traiter, en actionnant les vannes 203, 207 et 224 et/ou les injecteurs 21 a à 21 d ou 221 a à 221 d.

De même, l'injection de matière active de chacune des buses peut être activée, désactivée, ou dosée différemment, selon l'état de la culture à traiter, par exemple par imagerie infrarouge, ou par la position GPS caractérisant la forme et les bordures du champ, ou une surface déjà traitée, ou la proximité d'une zone sensible à respecter. Par exemple, notamment lors de l'application d'un désherbant, l'injection de matière active peut dépendre du fait que les plantes à traiter sont vigoureuses ou en mauvaise santé, ce qui peut être détecté par imagerie infrarouge. Les moyens de commande permettent donc de réguler, grâce aux injecteurs, le débit de matière active en fonction de l'état de la surface végétale à traiter. En variante ou en complément, ces moyens de commande permettent de réguler le débit de matière active en fonction de la vitesse de déplacement du pulvérisateur, c'est-à-dire de la vitesse d'avance d'un tracteur qui le supporte ou le tracte.

Quel que soit le mode de réalisation, l'ensemble de pulvérisation peut ainsi fonctionner en recirculation, notamment pour maintenir le liquide en mouvement, même après avoir provisoirement interrompu, de façon partielle ou totale, sa pulvérisation.

Dans tous les modes de réalisation, notamment ceux illustrés, l'ensemble de pulvérisation objet de l'invention permet d'incorporer la ou les matières actives au liquide à pulvériser « au dernier moment », c'est-à-dire juste avant la pulvérisation effective de ce liquide.

On peut donc adapter de manière instantanée le dosage en matière active du liquide à pulvériser en commandant de manière appropriée, c'est-à-dire totale, partielle ou proportionnelle, les injecteurs 21 a à 21 d ou 221 a à 221 d, et par conséquent éviter les surdosages ou les sous-dosages constatés dans les ensembles de la technique antérieure.

En effet, le volume propre de chaque injecteur de matière active 21 a à 21 d ou 221a à 221d n'est pas en communication de fluide permanente avec la zone de mélange du corps 3. Par conséquent, un injecteur 21/221, physiquement mitoyen et très proche de la chambre de mélange 3 qui doit être très petite et turbulente, pour assurer une bonne homogénéisation, n'induit pas d'inertie dans le dosage du mélange, ce qui permet à chaque buse 1 de réaliser des variations rapides, voire instantanées, de la concentration de ce mélange.

On peut envisager que les injecteurs 21 a à 21 d ou 221 a à 221 d et/ou les pompes secondaires 33a à 33d soient également interfacés avec le système de régulation DPA éventuel de la pompe 13, de manière à adapter également la quantité de matières actives incorporée au liquide à pulvériser à la vitesse de déplacement du pulvérisateur.

Les cuves secondaires 25a à 25d peuvent contenir soit des mélanges différents, soit des mélanges identiques. Dans ce dernier cas, on peut disposer d'une plus grande plage de variation de quantité d'une matière active donnée incorporée au liquide à pulvériser.

Ceci permet, en effet, d'adapter la quantité de matière active injectée dans le corps 3 à une gamme étendue de variation de vitesses du pulvérisateur située par exemple entre 3 et 30 kilomètres par heure.

Ceci peut être utile notamment lorsque la ou les matières actives devant être incorporées au liquide à pulvériser dans le corps 3 sont incompatibles avec le produit phytosanitaire véhiculé par ce liquide, via la pompe 13 et la conduite 7, ou bien encore lorsque l'on doit incorporer cette ou ces matières actives au liquide à pulvériser à très faible dose et/ou uniquement à certains instants.

Un autre avantage de l'ensemble de pulvérisation objet de l'invention réside dans le fait qu'une fois choisie la taille des gouttes du liquide à pulvériser par la buse 1, en jouant notamment sur la pression de liquide dans la conduite principale 7 et sur le type de buse, l'incorporation de matières actives au moyen des injecteurs 21 ou 221, au niveau de la buse 1 ou de divers tronçons de la rampe 9, est pratiquement sans effet sur la taille de ces gouttes.

En effet, un ensemble conforme à l'invention, y compris dans son utilisation sans DPA ni variation de pression de la pompe13 met en oeuvre des moyens de maintien de la pression du liquide à pulvériser, ce qui permet de maintenir sensiblement constante la taille des gouttes projetées. On peut donc maîtriser cette taille de gouttes, et par conséquent optimiser l'adaptation de la pulvérisation à chaque catégorie de végétaux.

De plus, un tel ensemble met en oeuvre des moyens permettant de réguler le débit de matière active, donc sa concentration dans le liquide à pulvériser, proportionnellement à la vitesse d'avancement de la rampe 9, sans pour autant modifier le débit de ce liquide porteur lui-même.

Outre la taille des gouttes, qui est en l'occurrence constante, l'utilisateur peut ainsi faire varier à sa guise, éventuellement manuellement, la concentration en matière active, de façon particulièrement précise et localisée.

De plus, chaque moyen de maintien de pression et chaque moyen de régulation du débit est actionnable individuellement et indépendamment, ce qui permet un contrôle « unitaire » de chaque injecteur et de chaque buse indépendamment les uns des autres, ce qui garantit au pulvérisateur une utilisation souple et à large spectre quant aux végétaux à traiter.

Selon un aspect de l'invention qui est optionnel et qui est représenté uniquement à la figure 1, la buse 1 comprend une rampe 400 d'injection d'air à contre-courant dans les injecteurs 21 a à 21 d. Plus précisément, un injecteur d'air 401a appartenant à la rampe 400 débouche dans l'injecteur 21a et est dirigé vers la conduite 23a. Des injecteurs correspondants appartenant à la rampe 400 débouchent dans les autres injecteurs. La rampe 400 est reliée à une source S d'air comprimé, à travers une vanne commandée 402.

Ainsi, au terme d'une demi-journée ou d'une journée de pulvérisation, il est possible à l'utilisateur d'injecter, dans les injecteurs 21 a à 21 d, et à contre-courant du sens de circulation normal du liquide à pulvériser, une quantité d'air suffisante pour nettoyer ces injecteurs et repousser les produits à pulvériser effectivement vers les réservoirs 25a à 25d, à travers les conduites 23a à 23d, les obturateurs 24a à 24d, les pompes 33a à 33d et les conduits 27a à 27d. Ainsi, les produits présents dans les injecteurs 21 a à 21 d et dans leurs moyens d'alimentation respectifs peuvent être récupérés à la fin d'une période de pulvérisation. Cette opération permet également de diminuer la quantité d'eau ou de produit liquide nécessaire pour nettoyer les injecteurs 21a à 21 d et leurs moyens d'alimentation en produit à pulvériser au terme d'une séance de pulvérisation.

Une construction similaire, avec des moyens d'injection d'air à contre-courant, peut être adoptée avec l'ensemble de pulvérisation et le pulvérisateur de la figure 2.

Bien entendu, la présente invention n'est nullement limitée à l'exemple qui vient d'être décrit, fourni à titre d'exemple illustratif et non limitatif.

## Revendications

1. Ensemble de pulvérisation, comprenant au moins une buse (1) destinée à projeter un liquide à pulvériser, ainsi qu'au moins un injecteur de matière active (21a-21 d ; 221a-221d) dans le liquide à pulvériser, l'injecteur (21a-21d ; 221a-221d) étant situé directement en amont de la ou chaque buse (1) et alimenté en matière active au moyen d'une pompe (33a-33d) ou d'un réservoir sous pression (25a-25d), avec interposition d'un obturateur (24a-24d ; 224a-224d) sur une conduite (23a-23d) reliant la pompe ou le réservoir sous pression à l'injecteur, **caractérisé en ce qu'**il comprend en outre, pour chaque injecteur (21 a-21 d ; 221 a-221 d), un clapet de sortie (22a-22d ; 222a-222d) agencé de façon à en obturer un orifice de sortie (26a-26d ; 226a-226d).

2. Ensemble selon la revendication 1, **caractérisé en ce que** le ou chaque clapet de sortie (22a-22d ; 222a-222d) est un pointeau adapté pour accoster un siège ménagé au niveau de l'orifice de sortie (26a-26d ; 226a-226d).

3. Ensemble selon la revendication 1 ou 2, **caractérisé en ce que** la ou chaque buse (1) et le ou chaque injecteur (21a-21d ; 221a-221d) sont montés sur un même corps (3) ou sur deux corps voisins, un mélange du liquide à pulvériser avec de la matière active se produisant par turbulence dans le ou chaque corps (3).

4. Ensemble selon l'une des revendications précédentes, **caractérisé en ce que** plusieurs injecteurs (21 a-21 d ; 221 a-221 d) sont situés directement en amont de la ou chaque buse (1).

5. Ensemble selon l'une quelconque des revendications précédentes, **caractérisé en ce qu'**il comprend des moyens de commande à distance de chaque injecteur (21a-21d ; 221a-221d) et/ou de chaque clapet de sortie (22a-22d ; 222a-222d) et **en ce que** le ou chaque injecteur (21a-21d ; 221a-221d) et/ou le ou chaque clapet de sortie (22a-22d ; 222a-222d) est actionnable à distance.

6. Ensemble selon la revendication 5, **caractérisé en ce que** le ou chaque injecteur est choisi dans le groupe comprenant une vanne ou une pompe de type céramique, électromagnétique, piézoélectrique ou péristaltique.

7. Ensemble selon l'une des revendications précédentes, **caractérisé en ce qu'**il comprend plusieurs injecteurs (21a-21d ;221a-221d) alimentés en matière active, ainsi qu'une rampe (400) qui comprend plusieurs injecteurs pour injecter de l'air dans chaque injecteur (21 a-21 d ; 221 a-221 d).

8. Pulvérisateur équipé d'au moins un ensemble conforme à l'une quelconque des revendications précédentes, comprenant au moins une conduite principale (7) destinée à alimenter la ou chaque buse (1) en liquide à pulvériser, et au moins une conduite secondaire (23a-23d) destinée à alimenter le ou chaque injecteur (21a-21d ; 221 a-221 d) en matière active.

9. Pulvérisateur selon la revendication 8 équipé d'un ensemble conforme à la revendication 3, **caractérisé en ce qu'**il comprend une pluralité de conduites secondaires (23a-23d) alimentant respectivement chaque injecteur (21a-21d ; 221 a-221d).

10. Pulvérisateur selon l'une des revendications 8 ou 9, **caractérisé en ce qu'**il comprend des moyens pour maintenir la pression, du liquide à pulvériser, constante directement en amont de la ou chaque buse (1).

11. Pulvérisateur selon l'une des revendications 8 ou 9 équipé d'un ensemble conforme à la revendication 3, **caractérisé en ce qu'**il comprend des moyens de régulation du débit de matière active dans le ou chaque corps (3).

12. Pulvérisateur selon l'une des revendications 8 à 11, **caractérisé en ce qu'**il comprend des moyens de régulation adaptés pour réguler le débit de matière active dans chaque injecteur (21a-21d ; 221a-221d) en fonction de la vitesse de déplacement du pulvérisateur et/ou de l'état de la surface végétale à traiter.

13. Pulvérisateur selon la revendication 8 et l'une des revendications 11 ou 12, **caractérisé en ce que** chaque moyen pour maintenir la pression du liquide à pulvériser et chaque moyen de régulation du débit est actionnable individuellement et indépendamment.

14. Pulvérisateur selon l'une des revendications 8 à 13 équipé d'un ensemble conforme à la revendication 6, **caractérisé en ce que** le ou chaque injecteur (221a-221d) comprend une pompe ou une vanne piézoélectrique, électromagnétique, ou péristaltique, et **en ce que** lesdits moyens de commande sont adaptés pour faire varier la vitesse de fonctionnement de la pompe ou de la vanne afin d'en piloter le débit.

15. Pulvérisateur selon l'une des revendications 8 à 14, **caractérisé en ce qu'**au moins une des conduites secondaires (23a-23d) est adaptée pour canaliser un premier type de matière active, par exemple un herbicide, et **en ce qu'**au moins une autre des conduites secondaires (23a-23d) est adaptée pour canaliser un deuxième type de matière active, par exemple un insecticide, un fongicide ou un agent mouillant.

16. Pulvérisateur selon l'une des revendications 8 à 15, **caractérisé en ce que** la ou chaque conduite principale (7) comporte au moins une vanne (203, 207) pour commander la circulation de liquide à pulvériser et **en ce que** la ou chaque conduite secondaire (23a-23d) comporte au moins un obturateur (222a) pour commander la circulation de matière active, la ou chaque vanne (207) et le ou chaque obturateur (24a, 24b, 24c, 24d ; 224a) étant actionnables à distance.

17. Procédé de nettoyage d'un ensemble de pulvérisation selon la revendication 7, **caractérisé en ce qu'**il comprend des étapes consistant à :
a) injecter, à partir de la rampe (400) et dans chaque injecteur (21a-21d ; 221a-221d), à contre-courant du sens d'écoulement de la matière active dans cet injecteur, une quantité d'air et
b) repousser une partie de la matière active présente dans cet injecteur et dans ses moyens d'alimentation (23-23d, 24a-24d, 27a-27d, 33a-33d) vers un réservoir (25a-25d) de stockage de la matière active.

## Patentansprüche

1. Zerstäubungseinrichtung, umfassend mindestens eine Düse (1), die vorgesehen ist, eine zu zerstäubende Flüssigkeit zu versprühen, sowie mindestens einen Injektor (21a - 21d; 221a - 221d) für einen aktiven Stoff in die zu zerstäubende Flüssigkeit, wobei der Injektor (21a - 21d; 221a - 221d) direkt stromaufwärts zu der oder jeder Düse (1) liegt und mit aktivem Stoff mittels einer Pumpe (33a - 33d) oder eines unter Druck stehenden Behälters (25a - 25d) versorgt wird, wobei ein Verschlussorgan (24a - 24d; 224a - 224d) in einem Kanal (23a - 23d) angeordnet ist, der die Pumpe oder den unter Druck stehenden Behälter mit dem Injektor verbindet, **dadurch gekennzeichnet, dass** sie außerdem für jeden Injektor (21a - 21d; 221a - 221d) ein Ausgangsventil (22a - 22d; 222a - 222d) aufweist, das derart angeordnet ist, dass es eine Ausgangsöffnung (26a - 26d; 226a - 226d) verschließt.

2. Einrichtung nach Anspruch 1, **dadurch gekennzeichnet, dass** das oder jedes Ausgangsventil (22a - 22d; 222a - 222d) als Ventilnadel ausgebildet ist, die angepasst ist, sich an einen Sitz anzulegen, der an der Ausgangsöffnung (26a - 26d; 226a - 226d) eingearbeitet ist.

3. Einrichtung nach Anspruch 1 oder 2, **dadurch gekennzeichnet, dass** die oder jede Düse (1) und der oder jeder Injektor (21a - 21d; 221a - 221d) auf einem selben Körper (3) oder auf zwei benachbarten Körpern angeordnet sind, wobei eine Mischung der zu zerstäubenden Flüssigkeit und des aktiven Stoffs durch Turbulenz in dem oder in jedem Körper (3) hergestellt wird.

4. Einrichtung nach einem der vorhergehenden Ansprüche, **dadurch gekennzeichnet, dass** mehrere Injektoren (21a - 21d; 221a - 221d) direkt stromaufwärts zu der oder jeder Düse (1) angeordnet sind.

5. Einrichtung nach einem beliebigen der vorhergehenden Ansprüche, **dadurch gekennzeichnet, dass** sie Mittel zur Fernsteuerung jedes Injektors (21a - 21d; 221a - 221d) und/oder jedes Ausgangsventils (22a - 22d; 222a - 222d) umfasst und dass der oder jeder Injektor (21a - 21d; 221a - 221d) und/oder das oder jedes Ausgangsventil (22a - 22d; 222a - 222d) ferngesteuert betätigbar sind.

6. Einrichtung nach Anspruch 5, **dadurch gekennzeichnet, dass** der oder jeder Injektor ausgewählt ist aus der Gruppe, die ein Ventil oder eine Pumpe in keramischer, elektromagnetischer, piezoelektrischer oder peristaltischer Ausbildung umfasst.

7. Einrichtung nach einem der vorhergehenden Ansprüche, **dadurch gekennzeichnet, dass** sie mehrere Injektoren (21a - 21d; 221a - 221d), die mit aktivem Stoff versorgt werden, sowie einen Ausleger (400), der mehrere Injektoren zum Einspritzen von Luft in jeden Injektor (21a - 21d; 221a - 221d) aufweist, umfasst.

8. Zerstäubungsvorrichtung, die mit mindestens einer Einrichtung entsprechend einem beliebigen der vorhergehenden Ansprüche ausgerüstet ist, mindestens einen Hauptkanal (7), der vorgesehen ist, die oder jede Düse (1) mit zu zerstäubender Flüssigkeit zu versorgen, und mindestens einen Nebenkanal (23a - 23d) umfassend, der vorgesehen ist, den oder jeden Injektor (21a - 21d; 221a - 221d) mit aktivem Stoff zu versorgen.

9. Zerstäubungsvorrichtung nach Anspruch 8, die mit einer Einrichtung gemäß Anspruch 3 ausgerüstet ist, **dadurch gekennzeichnet, dass** sie eine Mehrzahl von Nebenkanälen (23a - 23d) aufweist, die jeweils die Injektoren (21a - 21d; 221a - 221d) versorgen.

10. Zerstäubungsvorrichtung nach einem der Ansprüche 8 oder 9, **dadurch gekennzeichnet, dass** sie Mittel zum Halten des Drucks der zu zerstäubenden Flüssigkeit auf einem konstanten Niveau direkt stromaufwärts zu der oder jeder Düse (1) umfasst.

11. Zerstäubungsvorrichtung nach einem der Ansprüche 8 oder 9, ausgerüstet mit einer Einrichtung gemäß Anspruch 3, **dadurch gekennzeichnet, dass** sie Mittel zum Regeln des Durchflusses an aktivem Stoff in den oder jeden Körper (3) umfasst.

12. Zerstäubungsvorrichtung nach einem der Ansprüche 8 bis 11, **dadurch gekennzeichnet, dass** sie Mittel zum Regeln umfasst, die angepasst sind, den Durchfluss an aktivem Stoff in jeden Injektor (21a - 21d; 221a - 221d) in Abhängigkeit von der Fahrgeschwindigkeit der Zerstäubungsvorrichtung und/oder dem Zustand der zu behandelnden Pflanzenoberfläche zu regeln.

13. Zerstäubungsvorrichtung nach Anspruch 8 und einem der Ansprüche 11 oder 12, **dadurch gekennzeichnet, dass** jedes Mittel zum Halten des Drucks der zu zerstäubenden Flüssigkeit und jedes Mittel zum Regeln des Durchflusses individuell und unabhängig betätigbar sind.

14. Zerstäubungsvorrichtung nach einem der Ansprüche 8 bis 13, ausgerüstet mit einer Einrichtung gemäß Anspruch 6, **dadurch gekennzeichnet, dass** der oder jeder Injektor (221a - 221d) eine piezoelektrische, elektromagnetische oder peristaltische Pumpe oder Ventil umfasst und dass die Mittel zur Steuerung angepasst sind, die Betriebsgeschwindigkeit der Pumpe oder des Ventils zu variieren, um damit den Durchfluss zu steuern.

15. Zerstäubungsvorrichtung nach einem der Ansprüche 8 bis 14, **dadurch gekennzeichnet, dass** mindestens einer der Nebenkanäle (23a - 23d) angepasst ist, eine erste Art von aktivem Stoff, z.B. ein Herbizid zu kanalisieren, und dass mindestens ein anderer der Nebenkanäle (23a - 23d) angepasst ist, eine zweite Art von aktivem Stoff, beispielsweise ein Insektizid, ein Fungizid und ein Netzmittel zu kanalisieren.

16. Zerstäubungsvorrichtung nach einem der Ansprüche 8 bis 15, **dadurch gekennzeichnet, dass** der oder jeder Hauptkanal (7) mindestens ein Ventil (203; 207) zur Steuerung der Zirkulation der zu zerstäubenden Flüssigkeit aufweist und dass der oder jeder Nebenkanal (23a - 23d) mindestens ein Verschlussorgan (222a) zum Steuern der Zirkulation des aktiven Stoffs aufweist, wobei das oder jedes Ventil (207) und das oder jedes Verschlussorgan (24a, 24b, 24c, 24d; 224a) ferngesteuert betätigbar sind.

17. Verfahren zum Reinigen einer Zerstäubungseinrichtung nach Anspruch 7, **dadurch gekennzeichnet, dass** es die Schritte umfasst, die darin bestehen:
a) von dem Ausleger (400) in jeden Injektor (21a - 21d; 221a - 221d) im Gegenstrom der Strömungsrichtung des aktiven Stoffs in diesen Injektor eine Luftmenge einzuspritzen und
b) einen Teil des in diesem Injektor und in seinen Versorgungsmitteln (23 - 23d, 24a - 24d, 27a - 27d, 33a - 33d) zu einem Lagerbehälter (25a - 25d) für aktiven Stoff vorhandenen aktiven Stoffs zurückzustoßen.

## Claims

1. A spraying assembly comprising at least one nozzle (1) for liquid that is to be sprayed, and at least one active substance injector (21a-21d; 221a-221d) into the liquid that is to be sprayed, the injector (21a-21d; 221a-221d) being situated directly upstream from at least one nozzle (1) and supplied with active substance to be sprayed by means of a pump (33a-33d) or a pressurized reservoir (25a-25d), with interposition of an obturator (24a-24d; 224a-224d) on a conduit (23a-23d) connecting the pump or the pressurized reservoir to the injector, **characterized in that** it additionally comprises, for each injector (21a-21d; 221a-221d), an outlet valve (22a-22d; 222a-222d) designed to close the or each outlet orifice (26a-26d; 226a-226d).

2. The assembly according to claim 1, **characterized in that** the or each outlet valve (22a-22d; 222a-222d) is a needle adapted to come alongside a seat formed at the outlet orifice (26a-26d; 226a-226d).

3. The assembly according to claim 1 or 2, **characterized in that** the or each nozzle (1) and the or each injector (21a-21d; 221a-221d) are mounted on a same body (3) or two adjacent bodies, a mixture of the liquid to be sprayed with the active substance occurring through turbulence in the or each body (3).

4. The assembly according to one of the preceding claims, **characterized in that** several injectors (21a-21d; 221a-221d) are situated directly upstream from the or each nozzle (1).

5. The assembly according to any one of the preceding claims, **characterized in that** it comprises means for remotely controlling each injector (21a-21d; 221a-221d) and/or each outlet valve (22a-22d; 222a-222d), and **in that** the or each injector (21 a-21 d; 221a-221d) and/or the or each outlet valve (22a-22d; 222a-222d) can be actuated remotely.

6. The assembly according to claim 5, **characterized in that** the or each injector is chosen from the group comprising a valve or pump of the ceramic, electromagnetic, piezoelectric or peristaltic type.

7. The assembly according to one of the preceding claims, **characterized in that** it comprises several injectors (21a-21d; 221a-221d) supplied with active substance, and a ramp (400) which includes several injectors for injecting air into each injector (21a-21d; 221 a-221 d).

8. A sprayer equipped with at least one assembly according to any one of the preceding claims, comprising at least one primary conduit (7) designed to supply the or each nozzle (1) with liquid to be sprayed, and at least one secondary conduit (23a-23d) designed to supply the or each injector (21a-21d; 221a-221d) with active substance.

9. The sprayer according to claim 8, equipped with an assembly according to claim 3, **characterized in that** it comprises a plurality of secondary conduits (23a-23d) respectively supplying each injector (21a-21d; 221a-221d).

10. The sprayer according to one of claims 8 or 9, **characterized in that** it comprises means for keeping the pressure of the liquid to be sprayed constant directly upstream of the or each nozzle (1).

11. The sprayer according to one of claims 8 or 9 equipped with an assembly according to claim 3, **characterized in that** it comprises means for regulating the flow rate of active substance in the or each body (3).

12. The sprayer according to one of claims 8 to 11, **characterized in that** it comprises regulating means adapted to regulate the flow rate of active substance in each injector (21a-21d; 221a-221d) as a function of the displacement speed of the sprayer and/or the state of the plant surface to be treated.

13. The sprayer according to claim 8 and one of claims 11 or 12, **characterized in that** each means for maintaining the pressure of the liquid to be sprayed and each means for regulating the flow rate can be actuated individually and independently.

14. The sprayer according to one of claims 8 to 13 equipped with an assembly according to claim 6, **characterized in that** the or each injector (221a-221d) comprises a pump or a piezoelectric, electromagnetic or peristaltic valve, and the control means are adapted to vary the operating speed of the pump or the valve so as to drive the flow rate thereof.

15. The sprayer according to one of claims 8 to 14, **characterized in that** at least one of the secondary conduits (23a-23d) is adapted to convey a first type of active substance, for example an herbicide, and **in that** at least one other of the secondary conduits (23a-23d) is adapted to convey a second type of active substance, for example an insecticide, a fungicide, or a wetting agent.

16. The sprayer according to one of claims 8 to 15, **characterized in that** the or each primary conduit (7) includes at least one valve (203, 207) to control the circulation of liquid to be sprayed and **in that** the or each secondary conduit (23a-23d) includes at least one obturator (222a) to control the circulation of active substance, the or each valve (207) and the or each obturator (24a, 24b, 24c, 24d; 224a) being able to be actuated remotely.

17. A method for cleaning a spraying assembly according to claim 7, **characterized in that** it comprises the following steps:
a) Injecting, from the ramp (400) and into each injector (21a-21d; 221a-221d), a quantity of air countercurrent from the direction of flow of the active substance to be sprayed **in that** injector, and
b) pushing part of the active substance to be sprayed that is present **in that** injector and in its supply means (23-23d, 24a-24d, 27a-27d, 33a-33d) back toward a storage reservoir (25a-25d) for the active substance.
